# EUROPEAN PATENT SPECIFICATION

(11) **EP 2 854 048 B1**
(45) Date of publication and mention of the grant of the patent: **11.07.2018**
(21) Application number: 14186606.1
(22) Date of filing: 26.09.2014
(51) Int. Cl.: G06F 17/30

(54) **Method of operating a mobile telecommunications device**
Verfahren zum Betreiben einer mobilen Telekommunikationsvorrichtung
Procédé d'exploitation d'un dispositif de télécommunication mobile

(30) Priority: 27.09.2013 US 201314040067
(43) Date of publication of application: 01.04.2015
(73) Proprietor: SAP SE, 69190 Walldorf (DE)
(72) Inventor: Marat, Rolan, 69190 Walldorf (DE); Zhang, Wanling, 69190 Walldorf (DE); Lavoie, Vincent, 69190 Walldorf (DE); Liang, Xuebo, 69190 Walldorf (DE); Gauthier, Alain, 69190 Walldorf (DE); Ghorayeb, Roy, 69190 Walldorf (DE); El-Jayousi, Mohannad, 69190 Walldorf (DE)
(74) Representative: Richardt Patentanwälte PartG mbB

(56) References cited:
- WO-A1-2007/009254
- WO-A2-2009/149433
- CA-A1- 2 615 747
- US-A- 5 864 837
- US-A1- 2013 067 170
- US-B1- 8 438 474
- US-B1- 8 543 554
- GLOMOP GROUP: "GloMop: Global Mobile Computing By Proxy", INTERNET CITATION, 13 September 1995 (1995-09-13), XP002094009, Retrieved from the Internet: URL:http://research.microsoft.com/research /os/SOSP-15/Fox.txt [retrieved on 1995-09-13]

## Description

### BACKGROUND

Last year's mobile data traffic was multiple times the size of the entire global Internet in 2000. Average smartphone usage grew as well in last years. For example, the average amount of traffic per smartphone is around 500 MB per month. However, the increase in the amount of traffic in particular smartphones may generate further resource costs for the user of the smartphones. Therefore there is a need to control the traffic amount used by smartphones.

US 2013/067170 A1 discloses a method for predictive caching of web pages for display through a screen of a mobile computing device.

WO 2007/009254 A1 discloses a method for detecting state changes between data stored in a first computing device and data received from a second computing device.

WO 2009/149433 A2 discloses a method and system in which a client is presenting a data file, stored at the local client, to a user. When the time to live, associated to the file, is expired, the client asks for the hash of the latest version of the file from the server. When the local and the obtained hash match, the local file is presented to the client, if they do not match, the client requests and presents the file from the server.

### SUMMARY

Various embodiments provide a method and a mobile telecommunication device as described by the subject matter of the independent claims. Advantageous embodiments are described in the dependent claims.

In one aspect, the invention relates to a method of operating a mobile telecommunications device for a telecommunication system, the telecommunication system comprising an application server that is connected to the mobile communications device via a network, the application server managing at least one database comprising a set of one or more documents, wherein the documents of the set of documents are assigned at least one network identification address for accessing the documents of the set of documents, the mobile telecommunication device comprising a processor, display device and memory, wherein the memory is configured to store at least one application, the application comprising instructions that, when executed, generate on the display device a graphical user interface, the graphical user interface comprising a set of user interface elements, wherein a first user interface element of the set of user interface elements is described by one or more documents of the set of documents, the method comprising:
a) receiving a selection of the first user interface element;
b) displaying on the display device a listing of the one or more documents;
c) receiving a selection of a document of the one or more documents;
d) accessing a cache of the telecommunication device for identifying the selected document in the cache;
e) in case the cache comprises the selected document
   ∘ using content of the selected document for generating a unique identifier for uniquely identifying the content of the selected document being stored in the cache;
   ∘ in response to a determination, using the unique identifier, that the content of the selected document matches content of a document of the set of documents, retrieving the document from the cache;
f) if the selected document is not stored in the cache and/or the content of the selected document stored in the cache is not matching with content of a document of the set of documents
   ∘ requesting from the application server a network identification address of the selected document, if the network identification address is not locally stored in the mobile telecommunication device, and receiving the network identification address;
   ∘ downloading using the network identification address the selected document;
   ∘ storing the downloaded document in the cache.

For example, each document of the set of documents is assigned a respective network identification address for accessing the document.

A network identification address may indicate the location of the document(s) to which it is assigned. The network identification address may be used to retrieve the document(s) to which it is assigned.

The network identification address may be generated and stored by the application server after the application server determines the location of the selected document to which the network identification address is assigned.

The selected document may be identified or searched by the application server using an ID (e.g. attachment ID described below) of the selected document. The ID of the selected document may be a unique ID (as described below with the attachment ID). The ID of the selected document may be received in the request of the network identification address of the selected document that is sent to the application server.

The set of user interface elements may comprise one or more user interface elements.

For example, the application may be automatically launched (e.g. in a periodic basis) or may be launched by a user of the mobile telecommunication device such that the instructions of the application may be executed.

The term "cache" as used herein refers to a temporary storage area that is a high-speed access area and may be either a memory cache or a disk cache. The cache may be, for example, a portion on memory of high-speed static RAM (SRAM) or may be part of main memory e.g. made up of dynamic RAM (DRAM).

The at least one database comprises a storage system in which data (e.g. documents) are stored. The data stored in the database is accessible to one or more users, where "accessible" refers to the ability to retrieve (or download) the data from the repository or the database.

The term document refers to information stored in a storage (e.g. a database or a cache). The document may comprise a data table, document file, image file, audio file, video file, data folder or container etc.

The term "user interface element" as used herein may be understood as a user interface object, or a set of user interface objects, displayed on a display screen of a device. A user interface element comprises a button, a text box, a tab, an icon, a text field, a pane, a check-box item, a menu bar, a title bar, an action bar or item group or the like. A user interface element may likewise be an image, a displayed alphanumeric character or any combination thereof.

The term "graphical user interface" or "user interface" as used herein refers to an interface generated by a program for display on a display screen of a device with selectable user interface elements.

The application comprises a calendar application, a contacts or address book application and/or a web application.

The above features may have the advantage of reducing the data traffic within the telecommunication system. This may also provide an optimal and reduced usage of the bandwidth or traffic that is assigned to the mobile telecommunication device.

Another advantage may reside in the fact that the access time to a given document may be shortened.

Another advantage may be that the present method may provide accurate results for searched documents.

Another advantage may be that the energy in the mobile telecommunication device may be saved, because when reducing the data traffic the energy (e.g. energy for sending or for receiving data) may be saved.

According to one embodiment, determining that the content of the selected document matches the content of a document of the set of documents comprises sending the unique identifier to the application server and requesting if the content of the selected document in the cache matches the content of a document of the set of documents using the unique identifier; receiving a response message from the application server indicating whether the selected document is matching with a document of the set of documents, wherein the response message comprises the network identification address of the selected document.

This embodiment may make use of the existing signaling for checking the content of the selected document between the mobile telecommunication device and the application server to retrieve the network identification address in the response message such that there is no need for requesting the network identification address again in step f). This may further reduce the data traffic.

According to one embodiment, the mobile telecommunication device stores metadata indicating the set of the documents, wherein determining that the content of the selected document matches the content of a document of the set of documents is performed by the mobile telecommunication device using the metadata.

For example, the metadata comprises a unique identifier for each document of at least part of the set of documents. The metadata may further comprise network identification addresses associated with the set of documents.

This embodiment may have the advantage of further reducing the data traffic in that the check of the content of the document is locally performed. This may be particularly advantageous when multiple documents are checked for their content. For example, if there are three documents, there may be a need to perform three communications with the application server in order to check the content of the three documents, while with the present embodiment at most one communication may be performed in order to get for example the metadata from the application server. The metadata may be alternatively obtained from a user of the telecommunication system.

According to one embodiment, the network identification address of the selected document is associated with an expiration time of the network identification address, wherein step e) further comprises: determining a next-refresh time of the cache using the size of the cache; in response to determining that the next-refresh time is later than the expiration time of the network identification address; controlling the application server to change the expiration time to a time later than the next-refresh time.

For example, each document of the set of documents is associated with a respective network identification address and an expiration time of the network identification address expiration time after which the network identification address becomes invalid.

For example, the resetting or refresh of the cache may be performed when a predetermined condition occurs. The predetermined condition includes the application is closed, the cache reaches a preset size limit, a new search is executed, a number of documents in the cache reaches a preset number limit, and/or a user requesting the document changes.

The size of the cache (or cache size) is equal to the size of the data stored in the cache. For example, the next refresh time (or resetting time) may be determined using a mapping table stored in the mobile telecommunication device. The mapping table comprising different cache sizes and associated estimated refresh time e.g. if the cache is 80% full, the refresh time may be in one half hour from the time at which the cache size reached 80% of the total size of the cache. In another example, the next refresh time may be determined using a refresh model implemented by a function that receives as input the cache size and outputs an estimated next refresh time based on the refresh model.

This may be particularly advantageous because the locally stored network identification address (i.e. the one received in the response message) may be still valid such that there is no need for an extra signaling to retrieve the network identification address again. In other terms, instead of sending a request to get the network identification address and then receiving the network identification address only a single submission of a control message to the application server may be sufficient. This embodiment may further reduce the data traffic within the telecommunication system.

According to one embodiment, the network identification address of the selected document is associated with an expiration time of the network identification address, wherein the mobile telecommunication device is a battery powered device. For example, each document of the set of documents is associated with an expiration time. The method further comprises: determining that the remaining battery lifetime ends at a given time after the expiration time of the network identification address; controlling the application server to change the expiration time to a time later than the given time.

For example, after the battery of the mobile telecommunication device drains the cache may be automatically refreshed such that the documents are not stored locally in the cache anymore. In this case, the network identification address that is received in the response message may be still usable (i.e. to download the document from the databases) and there is no need for extra signaling to retrieve the network identification address. This embodiment may further reduce the data traffic within the telecommunication system.

According to one embodiment, step e) is performed if the cache miss rate of the cache is below a predefined maximum cache miss rate threshold, otherwise if step e) is not performed the selected document is not in the cache. In other terms, it is assumed if the cache miss rate is higher than the predefined maximum cache miss rate threshold that the selected document is not or is not found in the cache.

This embodiment may save bandwidth, processing time and processing resources since a cache having high cache miss rate would most likely cause problems when accessing the documents stored therein.

A cache miss refers to a failed attempt to read or write a piece of data in the cache of the mobile telecommunication device.

According to one embodiment, the method further comprises establishing a first and a second communication link between the mobile telecommunication device and the application server and between the mobile telecommunication device and the databases respectively, wherein the bandwidth of the second communication link is higher than the bandwidth of the first communication link. The second communication link may be used for downloading the documents from the databases. The second communication link may be a secure communication link.

This embodiment may provide an optimal usage of the bandwidth or data traffic within the telecommunication system by assigning the right bandwidth to the corresponding signaling e.g. downloading documents may require more bandwidths and it may be preferable to download the documents using the second communication link such that data traffic is reduced because on a smaller bandwidth communication link the download may increase the data traffic in that it may take more time to download. For example, besides downloading the documents from the databases, the other operations such as requesting, controlling, sending or receiving from the application server may be performed on the first communication link.

A communication link may comprise physical resources (i.e., wireline and/or wireless) over which the data may be sent and may comprise various kind of connections between the different devices in the telecommunication system. For example, one of the first and second communication links may be a wireline link and the other link may be a wireless link.

According to one embodiment, the second data link has is a secure data link comprising a secure HyperText Transfer Protocol (HTTP) connection. This may provide a secure way for transmitting the documents.

According to one embodiment, the application comprises a forecast and planning mobile application wherein each of the set of documents comprises forecast data, wherein the graphical user interface comprises a timeline and first interface element represents an event on the timeline.

According to one embodiment, the network identification address comprises a HTTP URL, FTP address etc.

According to one embodiment, the unique identifier comprises at least one of: a file Cyclic Redundancy Check number, Hash number, SHA-1 or MD5 of the respective file associated with the identifier.

According to one embodiment, wherein the network identification address is user specific. User specific means that only the user to which the network identification address is assigned can download the document associated with the network identification address.

The mobile telecommunication device may comprise at least one of a, smartphone, a PDA, a laptop, a computer, and the like.

The telecommunication system may comprise a Wireless Mesh Networks system, a satellite telecommunication system and/or a digital wireless telecommunication system such as LTE, GSM etc.

In another aspect, the invention relates to a computer program product comprising computer executable instructions to perform the method steps of the method of the preceding embodiments.

In another aspect, the invention relates to a mobile telecommunication device for a mobile telecommunication system, the telecommunication system comprising an application server that is connected to the mobile communications device via a network, the application server managing at least one database comprising a set of one or more documents, wherein the documents of the set of documents are assigned at least one network identification address for accessing the documents, the mobile telecommunication device comprising a processor, display device and memory, wherein the memory is configured to store at least one application, the application comprising instructions that, when executed, generate on the display device a graphical user interface, the graphical user interface comprising a set of user interface elements, wherein a first user interface element of the set of user interface elements is described by one or more documents of the set of documents, the mobile telecommunication device comprising a control unit, wherein the control unit is configured for receiving a selection of the first user interface element; displaying on the display device a listing of the one or more documents; receiving a selection of a document of the one or more documents; accessing (or reading the content of) a cache of the mobile telecommunication device for identifying the selected document in the cache; in case the cache comprises the selected document using the content of the selected document for generating a unique identifier for uniquely identifying the content of the selected document being stored in the cache; in response to a determination, using the unique identifier, that the content of the selected document matches the content of a document of the set of documents, retrieving the selected document from the cache; if the selected document is not stored in the cache and/or the content of the selected document stored in the cache is not matching with a document of the set of documents; requesting from the application server a network identification address of the selected document, if the network identification address is not locally stored in the mobile telecommunication device, and receiving the network identification address; downloading using the network identification address the selected document; storing the downloaded document in the cache.

A computer implemented method may include requesting an object and receiving the object including attachment details for attachments associated with the object. The attachment details for each attachment may include an attachment name and an attachment ID. In response to a request to display the attachment details for the attachments associated with the object, the attachment name for each attachment associated with the object may be displayed. In response to a selection of one attachment, a determination may be made as to whether a list including attachments stored in an attachment cache includes the attachment ID of the selected attachment. If the list includes the attachment ID of the selected attachment, the selected attachment may be retrieved from the attachment cache. If the list does not include the attachment ID of the selected attachment, the attachment may be downloaded using an attachment uniform resource locators (URL). The attachment URL may be requested using the attachment ID. The downloaded attachment may also be stored in the attachment cache. The attachment cache may be reset when predetermined conditions occur.

In another aspect, the invention relates to a computer implemented method comprising: receiving, from a client device, a first request for an object; retrieving and sending details of the requested object, the details of the object including attachment details for attachments associated with the object, and attachment details for each attachment including an attachment name and an attachment ID; receiving, from the client device, a second request for an attachment selected from the attachments associated with the object, the second request including an attachment ID of the selected attachment; determining if an attachment cache includes the selected attachment; if the attachment cache includes the selected attachment, retrieving the selected attachment from the attachment cache and providing the selected attachment to the client device; if the attachment cache does not include the selected attachment; determining a location of the selected attachment based on the attachment ID; generating a URL of the selected attachment based on the location of the selected attachment; downloading the selected attachment using the URL; storing the downloaded attachment in the attachment cache; and providing data of the selected attachment to the client device.

According to one embodiment, the attachment details further include an attachment size and an attachment description.

According to one embodiment, the attachment ID is a unique ID for each attachment generated based on an object ID, class and object type.

According to one embodiment, the URL includes an expiration time after which the URL becomes invalid.

According to one embodiment, the method further comprises resetting the cache when a predetermined condition occurs.

According to one embodiment, the predetermined condition includes at least one of an application requesting the object is closed, the attachment cache reaches a preset size limit, a new search is executed, a number of attachments in the attachment cache reaches a preset attachment limit, and a user requesting the object changes.

According to one embodiment, the method further comprises deleting at least one attachment stored in the cache when the attachment stored in the cache meets a predetermined condition.

According to one embodiment, the URL of the selected attachment is received from a backend server that determines a location of the selected attachment based on the attachment ID and generates the URL of the selected attachment based on the location of the selected attachment.

According to one embodiment, the URL is generated for a specific user making the request for the URL, and only the specific user can download the attachment using the URL.

According to one embodiment, the attachment cache is part of a server receiving the requests from the client device.

According to one embodiment, the attachment cache is part of the client device making the request for the object.

According to one embodiment, the attachments are downloaded from an external server that is outside of an internal network including the client device.

In another aspect, the invention relates to a non-transitory computer readable medium containing program instructions, wherein execution of the program instructions by one or more processors of a computer system causes the one or more processors to carry out the steps of: displaying a user interface on a client device, receiving, from the client device, a first request for a data object; retrieving and sending details of the requested data object to the client device, the details of the data object including attachment details for attachments associated with the data object, attachment details for each attachment including an attachment name, an attachment ID and an attachment size, and the attachment details do not include the attachment, wherein the attachment ID is a unique ID generated based on a data object ID, class and data object type; displaying an attachment list in the user interface on the client device, the attachment list including the attachments associated with the data object; receiving, from the client device, a second request for an attachment selected from the attachment list, the second request including an attachment ID of the selected attachment; determining if an attachment cache on the client device includes the selected attachment; if the attachment cache includes the selected attachment, retrieving the selected attachment from the attachment cache and displaying the selected attachment on the client device; if the attachment cache does not include the selected attachment: determining a location of the selected attachment based on the attachment ID; generating a URL of the selected attachment based on the location of the selected attachment, the URL includes an expiration time after which the URL becomes invalid; sending the generated URL to the client device; downloading the selected attachment to the client device using the URL; storing the downloaded attachment in the attachment cache; and displaying the downloaded attachment on the client device; resetting the attachment cache when a predetermined condition occurs, the predetermined condition includes at least one of an application requesting the data object is closed, the attachment cache reaches a preset size limit, a new search is executed, a number of attachments in the attachment cache reaches a preset attachment limit, and a user requesting the data object changes.

### BRIEF DESCRIPTION OF THE DRAWINGS

The accompanying drawings illustrate the various embodiments and, together with the description, further serve to explain the principles of the embodiments and to enable one skilled in the pertinent art to make and use the embodiments.
FIG. 1 is a block diagram illustrating an example embodiment of a networked environment in which a client device connects to an application server via a network.
FIG. 2 illustrates a method of processing a request to receive an attachment according to an embodiment of the present disclosure.
FIG. 3 illustrates examples of conditions which may be used to reset the cache storing the downloaded attachments.
FIG. 4 illustrates a method of processing a request by a client device to receive an attachment according to an embodiment of the present disclosure.
FIG. 5 illustrates a user interface that may be used to request an attachment according to an embodiment of the present disclosure.
FIG. 6 illustrates a user interface that may be used to display a requested attachment according to an embodiment of the present disclosure.
FIG. 7 is a block diagram of an exemplary computer system that may be used with the embodiments of the present disclosure.
FIG. 8 schematically depicts a mobile telecommunication device according to the present disclosure.

### DETAILED DESCRIPTION

Embodiments of the present disclosure provide systems and methods for downloading an attachment to a client device. The attachments may be associated with a data object. The method may be performed by a client device and/or a server associated with the client device.

A method to receive an attachment at the client device may include requesting details of an object and attachments associated with the object. The attachment details for each attachment may include a unique attachment ID. In response to a selection of an attachment associated with the object, a determination may be made as to whether a cache already includes the selected attachment. If the cache includes the selected attachment, the selected attachment may be retrieved from the attachment cache. If the cache does not include the selected attachment, the attachment may be downloaded using an attachment URL. The attachment URL may be requested and generated based on the attachment ID. The downloaded attachment may also be stored in the attachment cache.

Unlike the previous methods, the URL may not be provided to the user when the attachment information is sent to the user. The URL may be provided to the user when the user requests the attachment. The URL may be requested based on a unique attachment ID assigned to the attachment. Thus, the user may not have the problems with an expired URL.

In addition, before downloading the requested attachment from an external source, a determination may be made to determine whether the requested attachment is already stored in the cache. If the requested attachment is already stored in the cache it may not be necessary to download the attachment from the external source again. Thus, the time and the resource used to download the requested attachment may be reduced.

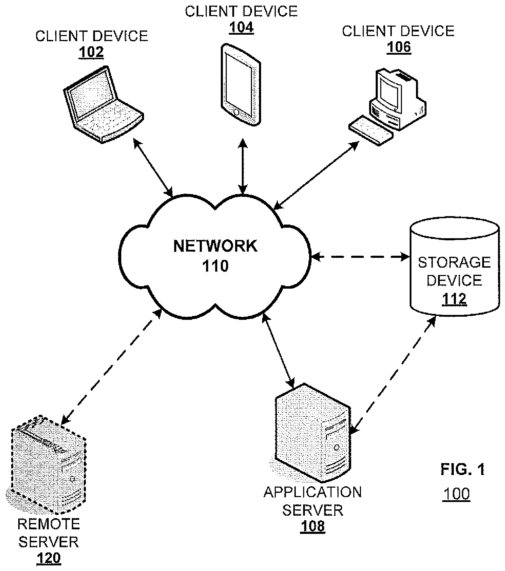

FIG. 1 is a block diagram illustrating an example embodiment of a networked environment 100 in which a client device 102, 104 or 106 connects to an application server 108 via a network 110. The client device 102, 104, or 106 may execute applications provided on the respective client device 102, 104 or 106 or may execute web-based applications provided by the application server 108 via the network 110. The applications executed by the client device 102, 104, or 106 may send and receive data to and from the application server 108 and/or the data storage device 112. The data may be generated, displayed and processed by the client device 102, 104 or 106. The data may include objects (e.g., data objects, messages, emails) and attachments associated with the objects.

The memory in the application server 108 or the data storage device 112 may include, point to, reference or store an object repository (e.g., data object repository). The object repository may access objects in response to request from the client device 102, 104 or 106.

A data object may include an entity in a data processing system. The data object may include functions (in the form of methods) and the data (in the form of attributes). A data object may include a plurality of layers including a kernel layer, an integrity layer, an interface layer and an access layer. The kernel layer may represent the object's inherent data (e.g., name, identification address of a user). The integrity layer may include data logic of the object. The data logic of the object may include data rules for consistent embedding in the environment and constraints regarding values and domains that apply to the object type. The interface layer may supply valid options for accessing the object type, defining the object's interface to the outside applications. The access layer may define technologies that allow external access to the object data.

A data object associated with attachments may include one or more references to the attachment objects. For example, a data object with associated attachments may be represented to the client in an object oriented way where the data object includes a list of references to the attachment objects. Each attachment object may include information related to the respective attachment such as attachment name, attachment IDs, attachment description, or attachment size.

The attachments may include data or a file (e.g., data object attachment) that is associated with the object. The attachment may not be part of the object but may be referenced by the object. For example, an object may include a message referring to the attachment. In one embodiment, the message includes information about the attachment but will not include the attachment itself. The attachments may include still or video images, text or multimedia documents, e-mails messages, audio segments, voice recordings, or other information. Specific type of data object attachments may include JPEG, Portable Network Graphics (PNG), Portable Document Format (PDF) and PowerPoint ® Presentation (PPT). The attachment may be loaded to the client device 102, 104 or 106 from the application server 108 or the data storage device 112. In another embodiment, the attachment may be loaded to the application server 108 or the data storage device 112 from an external server (e.g., remote server 120). The source of the object with which the attachment is associated may be different from the source of the attachment. For example, the source of the object may be from a storage device within an internal network and the source of the attachment may be from a source outside of the internal network.

The network 110 may be an internal network, an external network or a plurality of different interconnected networks which may include the Internet. The remote server 120 may connect via an external network to an internal network connecting the client devices 102, 104 or 106 to the application server 108.

The object and/or the attachment may be displayed on the client device 102, 104, or 106 in response to requests made by a user operating the client device 102, 104 or 106. Based on the displayed data, a user may make decisions for a data organization. The user may issue instructions for the data organization via the client device 102, 104, or 106.

The client device 102, 104, 106 may include, for example, a mobile device (e.g., mobile phone or a smart phone), a personal computer, a tablet, a terminal device, or a personal digital assistant (PDA). The client device 102, 104, 106 may include an input device (e.g., a touch screen, a touch pad, a mouse or a keyboard) to receive commands from a user.

The data storage device 112 may be a data warehouse processing system. The data warehouse processing system may perform data cleaning, integration, transformation and refreshing. The data storage device 112 may be an in-memory database (e.g., SAP® HANA database).

In another embodiment, one or more of the client devices 102, 104, 106 may be terminals that display information provided by the application server 108. The application server may execute applications and display information on the client devices 102, 104, 106 in response to commands issued at the client device 102, 104, 106. In this embodiment, information may merely be displayed at the client devices 102, 104, 106 without downloading data objects or attachments to the client devices 102, 104, 106.

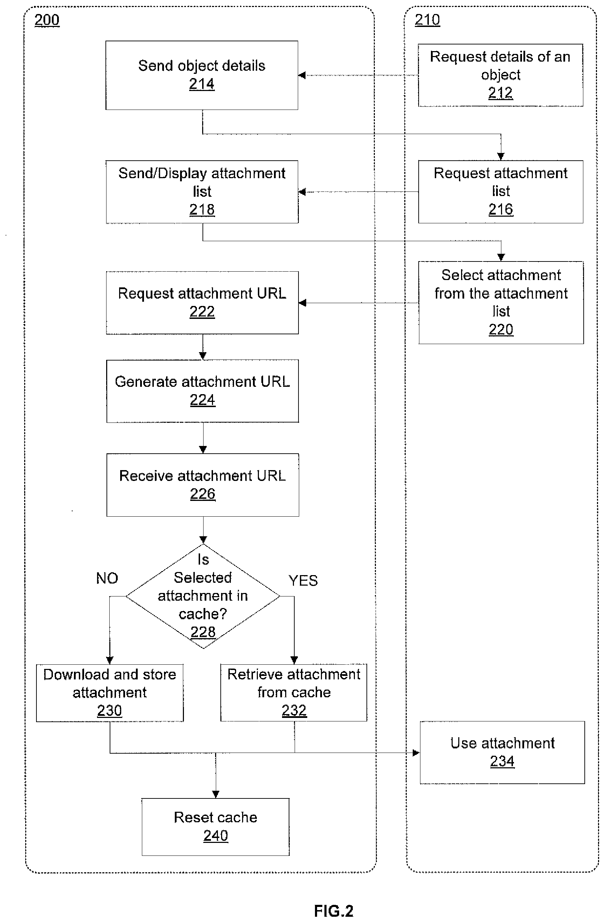

FIG. 2 illustrates a method 200 of processing a request to receive an attachment according to an embodiment of the present disclosure. The method 200 may be performed in response to requests made by a user 210. The user 210 may make the requests via an input device on a client device. The steps of method 200 may be performed by the client device and/or the server.

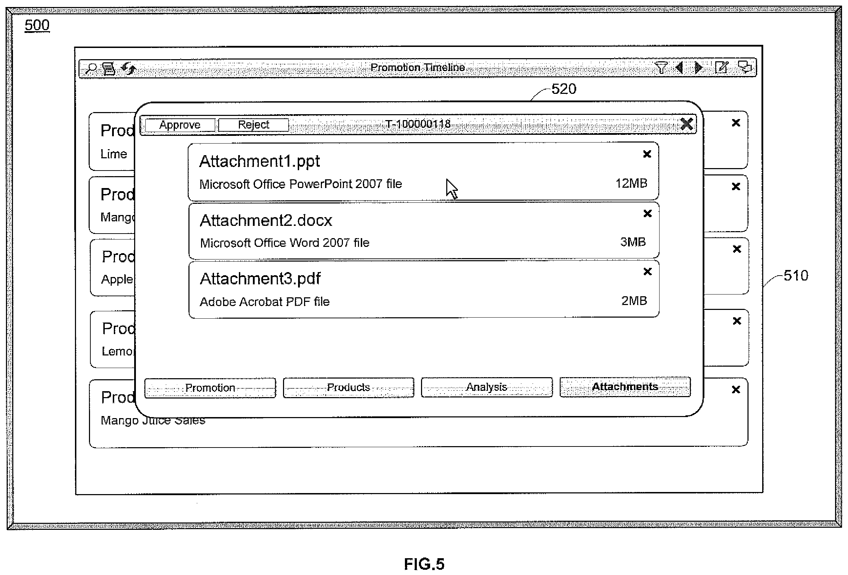

The user 210 may request details of one or more objects (box 212). The request may be made in response to a notification received by the user or based on an operation the user wants to perform. The request for the object may be made automatically in response to the user executing an operation in an application on the client device. The user may make the request by selecting one of the available data objects displayed by the client device. The client device may display a list of objects for which details can be requested. The data objects may be displayed in a graphical format that allows a user to click on the displayed data object to receive additional details of the selected data object. In response to the selection, a user interface window may be opened with details of the selected data object (e.g., see FIG. 5).

In response to the request for the details of one or more objects, the object details may be sent (box 214) to the user. The object details may be retrieved from a memory storing the object details (e.g., memory on a server or a storage device). The object details may include an indication of whether attachments are associated with the object.

Based on the object details, the user may request an attachment list (box 216). In response to the request, the requested attachment list may be sent and displayed to the user (box 218). In another embodiment, the attachment list may be included as part of the object details sent to the user (box 214).

The attachment list may provide the user with one or more attachments that are associated with the object. The attachment list may include information about the attachments without including the attachment. Details of each attachment may include one or more of attachment name, attachment type, attachment ID, attachment description and attachment size. The attachment list may indicate which attachments can be downloaded by the user. Some attachments may not be downloaded by the user due to security settings for the client device and/or the user.

In one embodiment, the details of the attachment may include a preview of the attachment (e.g., low resolution image) or a portion of the attachment (e.g., introduction to a document, summary of the attachment or predetermined number of frames of a video).

The attachment ID may be a unique ID that is created based on the details of the attachment and/or the association between the attachments and the related object. The attachment ID may be used by the client device, application server and other systems to identify the attachments. The unique ID may be based on a combination of attributes of the attachment and/or the object with which the attachment is associated. For example, the unique ID may be based on a combination of an object ID, class type and object type. The attachment ID may be created when the attachment is associated with the object. In one embodiment, the attachment ID may be created after the attachment is uploaded by a user and linked to a data object. In another embodiment, when the attachment is stored in the backend server side, a different set of parameters may be used to generate the attachment ID.

In one embodiment, the attachment list does not include the attachment uniform resource locators (URLs) for the attachments. The attachment URL provides the location of the attachment from which the attachment may be downloaded. Using the attachment URL the client device may download the attachment. The URL may point to the location which is within the network of the client device or to a location which is outside of the network in which the client device is located. When the URL is selected, the client device may send a request to a webserver and the web server may transmit the attachment referenced by the URL to the client device. Using the URL the client device may request the attachment directly from the source of the attachment without having to make the request via intermediate servers (e.g., application server 108 in FIG. 1).

Based on the information in the attachment list, the user may select an attachment (box 220) to be downloaded to the client device. The selection may include selecting the attachment ID for attachment to be downloaded.

In response to the selection, an attachment URL may be requested (box 222). The request for the attachment URL may be made to a backend server (e.g., Advanced Business Application Programming system). The request may include the attachment ID for which the attachment URL is requested.

Based on the request, the attachment URL may be generated (box 224). The attachment URL may be generated by finding the attachment using the attachment ID and generating the URL based on the location of the attachment. The attachments can be located on the backend server using a special component with backend application programing interfaces to retrieve the attachment data based on the given attachment ID. The component may be reused by several SAP® applications including, for example, SAP® Promotion Timeline application. When the attachment raw data (e.g. JPEG image) is saved in a database (e.g., SAP® database), the URL may be constructed in a way to point to a web service of the component which delivers the attachment raw data (e.g. JPEG image) upon a request.

The URL may include one or more security features. For example, the URL may include an expiration date of when the URL will expire and/or limitations of who may access the URL. The expiration date may be based on when the URL is generated or when the URL is accessed the first time. In one embodiment, the URL may expire after being accessed a predetermined number of times. A unique URL may be created for the user or the client device making the request for the attachment. The URL may include hash string for improved performance.

The attachment URL may be received by client device (box 226) to be used to download the attachment. Because the URL is generated on demand for the user, there may be no issues with the expiration of the URL.

The method 200 may include determining whether the selected attachment is already stored in the cache (box 228). The determination may be made by comparing the attachment ID of the requested attachment to the attachment IDs for attachments which are already stored in the cache. The cache may be the memory in the client device that is used for temporary storage of data before it is requested or for temporary storage of data likely to be used again. In one embodiment, the cache may be a memory that is not part of the client device but that is associated with the client device (e.g., memory coupled to the client device via an internal network).

If the cache does not include the attachment (NO in box 228), then the attachment may be downloaded (box 230) to the client device. The attachment may be downloaded based on the generated attachment URL. The downloaded attachment may also be stored in the cache. Storing the attachment in the cache may include adding the stored attachment's ID to the list of cached attachments.

If the cache includes the attachment (YES in box 228), then the attachment may be directly retrieved from the cache (box 232) without downloading the attachment from the remote or backend server. Retrieving the attachment from the cache may save time needed to download the attachment and reduce the resources needed for downloading the attachment (e.g., network bandwidth or locating the attachment). Retrieving the attachment from the cache also allows for the user to retrieve a desired attachment when the URL may be expired due to an expiration timestamp included by the backend server, when the network is down, or when the client device is not connected to the network.

After the attachment is retrieved, the attachment may be used by the user (box 234). For example, the user may make decisions based on the information in the attachment, print out the attachment, modify the content of the attachment or associate the attachment with other data objects. Associating the attachment with other data objects may include providing the unique ID of the attachment to the new data object, without attaching the actual attachment.

The cache storing the downloaded attachment may be reset (box 240) when predetermined conditions occur. A condition may be based on time, amount of information in the cache (e.g., percentage filled with data), operation performed by the user, security threat, change in users using the client device, status of application making the request for objects, running a new search query or size of the attachment. The condition may include resetting the cache when a client device that was in an offline mode, changes to an online mode in which attachments can be downloaded.

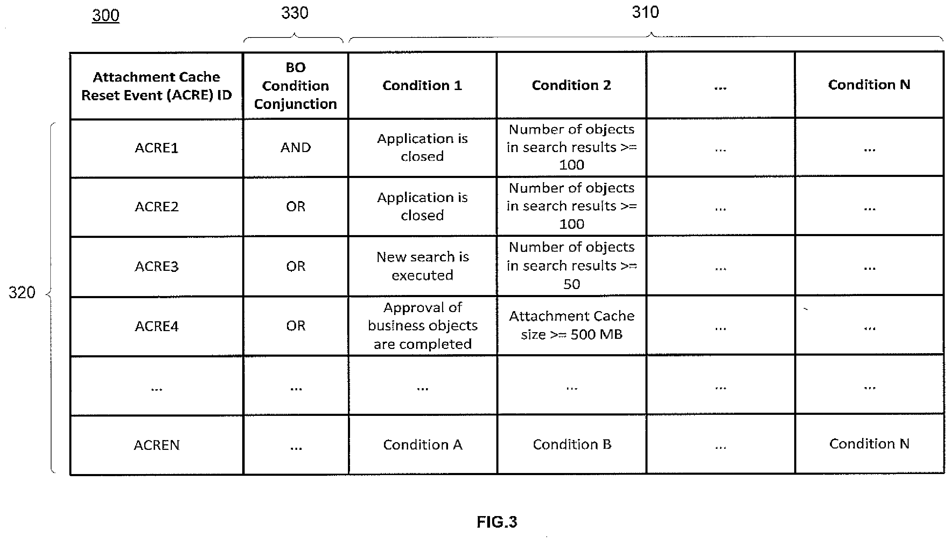

FIG. 3 illustrates examples of conditions 310 which may be used to reset the cache storing the downloaded attachments. The attachment cache reset event (ACRE) 320 may be activated when one or more of the conditions 310 are satisfied. The data object condition conjunction 330 may determine whether all of the conditions or some of the conditions have to be satisfied to reset the cache. For example, ACRE1 may require all of the conditions to be satisfied in order to reset the cache. Other ACRE 320 events may need only one of the conditions to be true to reset the cache (e.g., ACRE2, ACRE3 or ACRE4). A user may customize the conditions 310 for the cache to be reset.

The cache used to store the attachment may be a predetermined amount of memory in the client device dedicated to store the attachments. In other embodiments, all of the available memory may be used for the attachment cache. Thus, the amount of memory used for the attachment cache may change based on other resources using the available memory.

In one embodiment, instead of resetting the cache, one or more of the attachments in the cache may be deleted while other attachments remain in the cache. For example, if there is insufficient amount of space for a new attachment to be downloaded, one of the other attachments that meets a predetermined condition may be deleted. The predetermined condition for the attachment to be deleted may be the oldest attachment, the largest attachment, or the least accessed attachment. In another embodiment, one or more attachments that are associated with a specific user may be deleted when the user finishes his session.

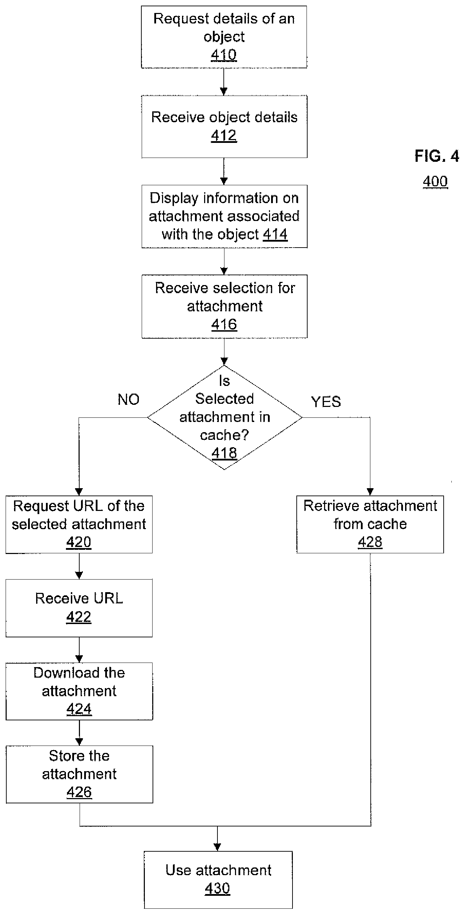

FIG. 4 illustrates a method 400 of processing a request by a client device to receive an attachment according to an embodiment of the present disclosure. The method 400 may be performed by a client device.

The client device may request details of an object (box 410). The user may make the request by selecting one of the available objects displayed by the client device. The client device may display a list of objects for which details can be requested by the user using the client device.

In response to the request, the object details may be sent by a server and received by the client device (box 412). The object details may be received from a memory storing the object details (e.g., memory on a server or a storage device). The object details may include attachments which are associated with the object. The information about the associated attachments may not include the actual attachment and the URL for downloading the attachment.

After the client device receives the object details, the user may select to display information about the attachment associated with the object. In response to the request, the client device may display information on the attachments associated with the object (box 414). The information about the associated attachments may include the name of the attachment, the size of the attachment, attachment ID, the type of attachment, attachment description and whether the user using the client device may download the attachment to the client device. In one embodiment, only information for the attachments which are allowed to be downloaded by the user may be displayed to the user. In another embodiment, displayed information on the attachments associated with the object may include which attachments are supported by the client device being used to request the attachment. For example, a particular client device may not support an attachment because the client device is not able to download an attachment that is over a particular size or the client device does not include an application to display a certain type of attachment.

Based on the displayed information, the user may select an attachment (box 416) to be downloaded to the client device. The selection may include selecting the attachment ID or the attachment name.

In response to the selection, client device may determine whether the selected attachment is already stored in the cache of the client device (box 418). The determination may be made by comparing the attachment ID of the requested attachment to the attachment IDs for attachments which are already stored in the cache.

If the cache does not include the attachment (NO in box 418), then the client device may request a URL of the selected attachment (box 420). The request for the URL may be sent to a server. The server may locate the attachment based on the ID of the requested attachment and generate a URL based on the location of the requested attachment.

The client device may receive the generated URL (box 422) from the server and download the attachment to the client device (box 424). The downloaded attachment may also be stored in the cache of the client device (box 426). The attachment may be downloaded based on the generated attachment URL and stored in the cache. Storing the attachment in the cache may also include adding the stored attachment's ID to the list of cached attachments.

If the cache includes the attachment (YES in box 418), then the attachment may be directly retrieved from the cache (box 428) without downloading the attachment from the remote or backend server. Retrieving the attachment from the cache may save time needed to download the attachment and reduce the resource needed for the download (e.g., network bandwidth or locating the attachment). Retrieving the attachment from the cache also allows for the user to retrieve a desired attachment when the URL may be expired due to an expiration timestamp included in the URL.

The downloaded attachment or the attachment retrieved from the cache may be used by the client device (box 430).

In one embodiment, the client device may be a terminal executing an application on the application server (e.g., application server 108 shown in FIG. 1). In this embodiment, the server may display a user interface on the client device and the user may make requests via the user interface displayed on the client device. The attachments may be downloaded to the server and the cache of the server may store the downloaded attachments. The requested attachment may be displayed by the server on the client device without having to send the attachment to the client device. In this embodiment, the same server may download the attachment and generate the URL to download the attachment or different servers may be used to perform these steps.

If the cache of the server is used to store downloaded attachments, the cache may store attachments requested by multiple client devices. The attachments in the cache of the server originally requested by one client device may be displayed on other client devices requesting the same attachment.

In another embodiment, displaying the attachments associated with a requested object may include displaying information about which attachments are available in the cache and which attachments still need to be downloaded. Thus the user may make a decision on which attachment to request based on the availability of the attachments in the cache.

FIG. 5 illustrates a user interface that may be used to request an attachment according to an embodiment of the present disclosure. The user interface may be displayed on a client device 500. The client device 500 may include a display 510 to display information about a data object (e.g., data objects for a promotion timeline). In response to a user command, the data object details may be displayed with a list of attachments 520. The list of attachments 520 may include a plurality of attachments that are associated with the data object and which can be downloaded by the user to the client device. As shown in FIG. 5, the attachment list 520 includes the name of each attachment, the type of attachment and the size of the attachment. In response to a user selecting one of the attachments (e.g., attachment1.ppt), the client device may send a request for the attachment URL and download the attachment using the attachment URL.

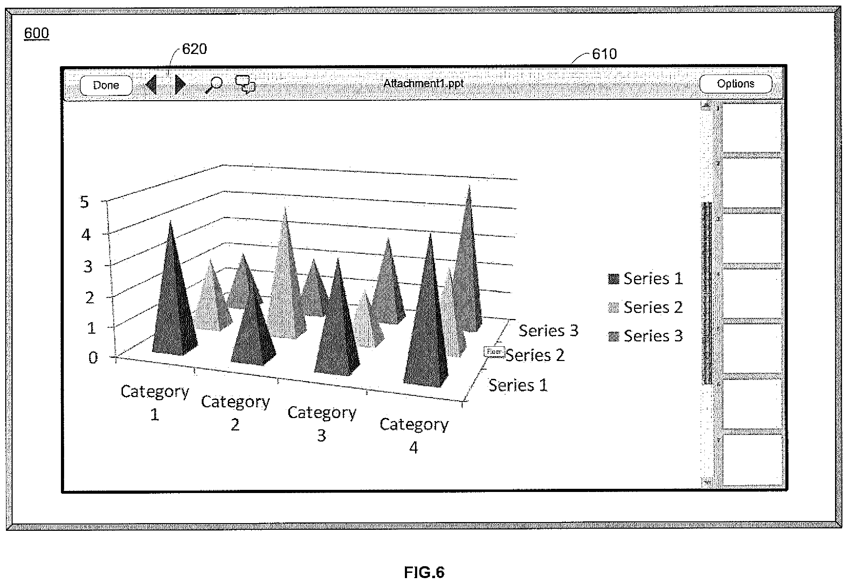

FIG. 6 illustrates a user interface that may be used to display a requested attachment according to an embodiment of the present disclosure. The user interface may be displayed on a client device 600. The client device 600 may include a display 610 to display the attachment (e.g., attachment1.ppt). The attachment may be displayed after it is retrieved from the cache or downloaded from a server using the attachment URL. The user may navigate to a next attachment using navigation controls 620 without having to go back to the list of available attachments (shown in FIG. 5). In response, to selecting one of the navigation controls 620 the client device may display the next attachment by obtaining the attachment from the cache or from a server using the attachment URL.

Some embodiments may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the disclosure may be implemented using Java, C++, or other object-oriented programming language and development tools. Another embodiment of the disclosure may be implemented in hard-wired circuitry in place of, or in combination with machine readable software instructions.

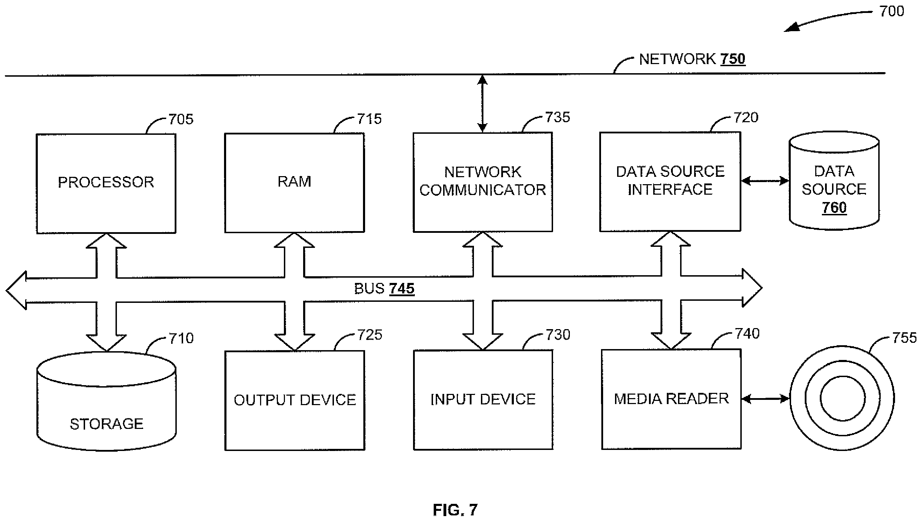

FIG. 7 is a block diagram of an exemplary computer system 700. The computer system 700 includes a processor 705 that executes software instructions or code stored on a computer readable storage medium 755 to perform the above-illustrated embodiments of the disclosure. The computer system 700 includes a media reader 740 to read the instructions from the computer readable storage medium 755 and store the instructions in storage 710 or in random access memory (RAM) 715. The storage 710 provides a large space for keeping static data where at least some instructions could be stored for later execution. The stored instructions may be further compiled to generate other representations of the instructions and dynamically stored in the RAM 715. The processor 705 reads instructions from the RAM 715 and performs actions as instructed. According to one embodiment of the disclosure, the computer system 700 further includes an output device 725 (e.g., a display) to provide at least some of the results of the execution as output including, but not limited to, visual information to users and an input device 730 to provide a user or another device with means for entering data and/or otherwise interacting with the computer system 700. Each of these output devices 725 and input devices 730 could be joined by one or more additional peripherals to further expand the capabilities of the computer system 700. A network communicator 735 may be provided to connect the computer system 700 to a network 750 and in turn to other devices connected to the network 750 including other clients, servers, data stores, and interfaces, for instance. The modules of the computer system 700 are interconnected via a bus 745. Computer system 700 includes a data source interface 720 to access data source 760. The data source 760 can be accessed via one or more abstraction layers implemented in hardware or software. For example, the data source 760 may be accessed by network 750. In some embodiments the data source 760 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., Online Analytic Processing - OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., Enterprise resource planning system), and the like. Data sources may also include a data source where the data is not tangibly stored or otherwise ephemeral such as data streams, broadcast data, and the like. These data sources can include associated data foundations, semantic layers, management systems, security systems and so on.

A semantic layer is an abstraction overlying one or more data sources. It removes the need for a user to master the various subtleties of existing query languages when writing queries. The provided abstraction includes metadata description of the data sources. The metadata can include technical terms meaningful for a user in place of the logical or physical descriptions used by the data source. For example, common terms in place of table and column names. These terms can be localized and/or domain specific. The layer may include logic associated with the underlying data allowing it to automatically formulate queries for execution against the underlying data sources. The logic includes connection to, structure for, and aspects of the data sources. Some semantic layers can be published, so that it can be shared by many users. Some semantic layers implement security at a granularity corresponding to the underlying data sources' structure or at the semantic layer. The specific forms of semantic layers includes data model objects that describe the underlying data source and define dimensions, attributes and measures with the underlying data. The objects can represent relationships between dimension members, provides calculations associated with the underlying data.

In the above description, numerous specific details are set forth to provide a thorough understanding of embodiments of the disclosure. One skilled in the relevant art will recognize, however that the various embodiments can be practiced without one or more of the specific details or with other methods, components, techniques, etc. In other instances, well-known operations or structures are not shown or described in detail to avoid obscuring aspects of the disclosure.

Although the processes illustrated and described herein include series of steps, it will be appreciated that the different embodiments of the present disclosure are not limited by the illustrated ordering of steps, as some steps may occur in different orders, some concurrently with other steps apart from that shown and described herein. In addition, not all illustrated steps may be required to implement a methodology in accordance with the present disclosure. Moreover, it will be appreciated that the processes may be implemented in association with the apparatus and systems illustrated and described herein as well as in association with other systems not illustrated.

The above descriptions and illustrations of embodiments of the disclosure, including what is described in the Abstract, is not intended to be exhaustive or to limit the embodiments to the precise forms disclosed. While specific embodiments of, and examples for, the embodiments are described herein for illustrative purposes, various equivalent modifications are possible within the scope of the disclosure, as those skilled in the relevant art will recognize. These modifications can be made to the embodiments in light of the above detailed description.

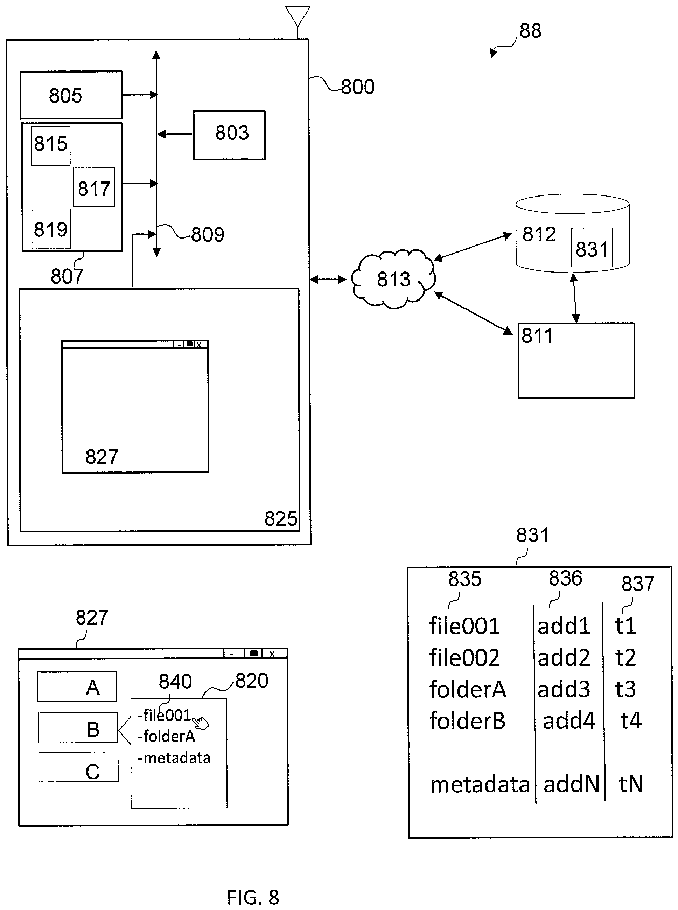

Fig. 8 shows an exemplary mobile telecommunication device 800 (e.g. such as client device 102, 104 or 106) for a telecommunication system 88 (e.g. such as networked environment 100 of Fig. 1). The telecommunication system 88 may comprise, for example, a cellular digital telecommunication system. The mobile telecommunication device 800 may comprise a processor 803, a transceiver 805, a memory 807 (e.g. a main memory) each capable of communicating with one or more components of the mobile telecommunication device 800. For example, all components are coupled to a bidirectional system bus 809. The mobile telecommunication device 88 further comprises a cache 817. Although, the cache 817 is shown as a portion of the memory 807, it may be separate from the memory 807 as a separate memory cache component (e.g. SRAM).

The processor 803 may be a microprocessor, a single core processor, a multicore processor or the like. The processor 803 may control the operation of the mobile telecommunication device 800. The transceiver 805 may be implemented as a transmitting and receiving component of the mobile telecommunication device 800.

The mobile telecommunication device 800 may further comprise a display device 825 which displays characters and images and the like. For example, the display device 825 may be a touch sensitive display screen.

For example, the mobile telecommunication device 800 may be powered by a battery or a solar power supply device including a solar panel and a rechargeable battery. In another example, the mobile telecommunication device 800 may be powered by any other power source.

The mobile telecommunication device 800 may be connected to an application server 811 (e.g. 108 of Fig. 1) through a network 813 such as a cellular digital system telecommunication network. The application server 811 may be a computer system. For example, the mobile telecommunication device 800 may be directly connected to the database server 811 or via a base station (not shown) of the cellular-digital wireless telecommunication system. Using the transceiver 805, the mobile telecommunication device 800 may exchange data with the application server 811 via the mobile cellular digital telecommunications network 813. For example, the network 813 may comprise any number and combination of networks.

The application server 811 may have control access to a database 812 (e.g. a computer storage system). The database 812 is shown as containing a set of documents or data 835. The set of documents 835 are associated with network identification addresses 836. A network identification address (such as attachment URL described above) may comprise a HTTP URL, FTP address or any address that may allow accessing so as to retrieve the document. Further, the network identification addresses may be assigned expiration times 837. An expiration time of (or assigned to) a network identification address is a time after which the network identification address becomes invalid in the sense that cannot be used to retrieve the document to which refers the network identification address.

For simplicity of the description only one database 812 is shown; however a skilled person having access to the present disclosure would recognize that more than one databases may be used.

The mobile telecommunication device 800 may be connected to the database 812 through the network 813 or through other networks (not shown).

Memory 807 is configured to store a plurality of mobile applications that are executable on the processor 803. Memory 807 may further comprise a control unit 819.

A mobile application 815 of the mobile applications comprises first instructions that, when executed by the processor 803, generate on the display device 825 a graphical user interface 827 (e.g. such as what displays 510 of Fig. 5). The mobile application may comprise for example, a web application, a calendar application and /or a technical task manager application.

The graphical user interface 827 when displayed comprises user interface elements e.g. A-C. A user interface element e.g. B of the user interface elements A-C may be a clickable user interface element.

The control unit 819 may receive a selection of a user interface element (e.g. user interface element B), for example, via a click from a user of the mobile telecommunication device 800 on the user interface element B.

In response to receiving the selection of the user interface element B, the control unit 819 may display on the display device a listing 820 of documents (e.g. such as a list of attachments 520 of Fig. 5) that provide description for the user interface element B. The documents of the listing 820 are stored in the database 812 as part of the set of documents 835. For example, if the user interface element B refers to a calendar event such as a meeting, the listed documents may relate to that event e.g. the documents may comprise an agenda file (e.g. a .pdf file document) for the meeting, a report document (e.g. a computer folder) related to the discussion items etc. The documents of the listing 820 may further comprise, for example, a design diagram screenshot of the software architecture (.png), a power point presentation (.ppt).

For example, the control unit 819 may prompt the user of the mobile telecommunication device 800 to select at least one of the listed documents 820. In another example, the display of the listing 820 may be sufficient to trigger the user to select a document in the listing.

Upon receiving a selection of a document e.g. file001 840 of the listing 820, the control unit may first check whether the selected document 840 is locally stored in the cache 817. This check may be performed for example only if the cache miss rate of the cache 817 is higher than a predetermined maximum cache miss rate threshold. This may save time, resources and bandwidth because knowing that the cache 817 has a high cache miss rate it is most likely that the selected document may not be found or if it is found may not be retrieved (e.g. cannot be retrieved due to a data corruption or some other reason).

If the cache 817 comprises the selected document 840 (e.g. because it has been used before by the same or another user of the mobile telecommunication device 800), then the control unit 819 may retrieve the selected document 840 from the cache 817 and may further display it or provide it to the user of the mobile telecommunication device 800.

In another example, if the cache 817 comprises the selected document 840 the control unit 819 may check whether its content is up-to-date, because it may happen that the version of the document 840 stored in the cache 817 is an old one and does not correspond anymore to the current version of document 840 that is stored in the database 812. For that the control unit 819 may generate a unique identifier for document 840 using the content of the document 840. The unique identifier is uniquely identifying the content of the document 840. The unique identifier may comprise, for example, a file Cyclic Redundancy Check number, Hash number, SHA-1 or MD5 number. For example, in case of folders archive files such as .ZIP or .RAR may be created from the folders and the unique identifier may be created.

Using the unique identifier, the control unit 819 may determine whether the document 840 stored in the cache 819 has the same content (e.g. same version) as the content of the document 840 being stored in the database 812. For that, the control unit 819, may either:
- use a mapping table that is locally stored in the mobile telecommunication device, wherein the mapping table comprises an up-to-date list of unique identifiers e.g. CRCs of the set of documents 835, to compare the generated unique identifier with the list of unique identifiers in the list, or
- send a request indicative of the generated unique identifier to the application server 811 such that the application server 811 may perform the comparison with unique identifiers of the stored documents in the database 812 and may send back a response message to the mobile telecommunication device 800 or control unit 819 indicating the results of the comparison. The application server 811 may be configured to send in the response message the network identification address add1 that is assigned to the document 840 that is stored in the database 812. This may provide an efficient use of the network or bandwidth in the telecommunication system 88 such that there is no need to setup a new connection, request and retrieve the network identification address add1. This may save bandwidth. For example, for performing the comparison, the application server 811 may generate the unique identifier for each document of the set of documents 835 using the same method used to generate the unique identifier of the document 840. In another example, the documents 835 may be stored in the database 812 in association with pre-calculated unique identifiers. Using those generated or pre-calculated unique identifiers the application server may determine whether the content of the selected document 840 that is found in the cache 819 matches e.g. has the same content as the document 840 that is stored in the database 812.

If the content of the selected document 840 stored in the cache 819 matches the content of the document 840 of the set of documents 835 that is stored in database 812, then the control unit 819 may retrieve the document 840 from the cache 819. IN this case there is no need for bandwidth usage so as to request and download the document 840.

However, if the selected document 840 is not stored locally e.g. in the cache 819, or the content of the selected document 840 stored in the cache 819 does not match the content of document 840 stored in the database 812 the control unit may send a request to the application server 811 to request the network identification address add1 of the selected document 840. This request may only be submitted if the address add1 is not locally stored. As described above, the network identification address add1 may be received in the response message.

The control unit 819 may thus receive the network identification address add1, and may download using the network identification address add1 the selected document 840 from the database 812.

For example, the control unit 819 may store the downloaded document 840 in the cache 819.

A user interface element A-C may comprise a button, a text box, a tab, an icon, a text field, an input field, a pane, a check-box item, a menu bar, a title bar, an action bar or item group or the like. A user interface element can likewise be an image, a displayed alphanumeric character or any combination thereof.

## Claims

1. A method of operating a mobile telecommunications device (800) for a telecommunication system (88), the telecommunication system (88) comprising an application server (811) that is connected to the mobile communications device (800) via a network (813), the application server (811) controlling access to at least one database (812) comprising a set of one or more documents (831, 835), wherein the documents of the set of documents (831, 835) are assigned at least one network identification address (836) for accessing the documents of the set of documents, the mobile telecommunication device (800) comprising a processor (803), display device (825) and memory (807), wherein the memory (807) is configured to store at least one application (815), the application (815) comprising instructions that, when executed, generate on the display device (825) a graphical user interface (827), the graphical user interface (827) comprising a set of user interface elements (A-C), wherein a first user interface element (B) of the set of user interface elements (A-C) is a graphical representation of one or more documents (820) of the set of documents (831, 835), the method comprising:
a) receiving a selection of the first user interface element (B);
b) displaying on the display device (825) a listing (820) of the one or more documents;
c) receiving a selection of a document (840) of the one or more documents (820);
d) identifying in a cache (817) of the mobile telecommunication device (800) the selected document;
e) in case the cache comprises the selected document (840)
∘ using the content of the selected document (840) for generating a unique identifier for uniquely identifying the content of the selected document (840) being stored in the cache;
∘ in response to a determination, using the unique identifier, that the content of the selected document (840) matches the content of a document of the set of documents (831, 835), retrieving the selected document (840) from the cache (817);
f) if the selected document (840) is not stored in the cache (817)
∘ requesting from the application server (811) a network identification address (add1) of the selected document (840), if the network identification address (add1) is not locally stored in the mobile telecommunication device (800), and receiving the network identification address (add1);
∘ downloading using the network identification address (add1) the selected document (840);
∘ storing the downloaded document (840) in the cache (817).

2. The method of claim 1, wherein determining that the content of the selected document matches the content of a document of the set of documents comprises
- sending the unique identifier to the application server (811) and requesting if the content of the selected document (840) in the cache (817) matches the content of a document of the set of documents (831, 835) using the unique identifier;
- receiving a response message from the application server (811) indicating whether the selected document (840) is matching with a document of the set of documents (831, 835), wherein the response message comprises the network identification address (add1) of the selected document (840).

3. The method of any of the preceding claims, wherein the network identification address (836) is associated with an expiration time of the network identification address (837), wherein step e) further comprises:
- determining a next-refresh time of the cache (817) using the size of the cache;
- in response to determining that the next-refresh time is later than the expiration time (t1) of the network identification address (add1);
- controlling the application server (811) to change the expiration time (t1) to a time later than the next-refresh time.

4. The method of any of the preceding claims, wherein the network identification address (836) is associated with an expiration time (837) of the network identification address, wherein the mobile telecommunication device (800) is a battery powered device, further comprising:
- determining that the remaining battery lifetime ends at a given time later after the expiration time of the network identification address (add1);
- controlling the application server (811) to change the expiration time (t1) to a time later than the given time.

5. The method of any of the preceding claims, wherein step e) is performed if the cache miss rate of the cache (817) is below a predefined maximum cache miss rate threshold, otherwise if step e) is not performed the selected document is not in the cache.

6. The method of any of the preceding claims, further comprising establishing a first and a second communication link between the mobile telecommunication device and the application server and between the mobile telecommunication device and the databases respectively, wherein the bandwidth of the second communication link is higher than the bandwidth of the first communication link.

7. The method of claim 6, wherein the second data link has is a secure data link comprising a secure HyperText Transfer Protocol (HTTP) connection.

8. The method of any of the preceding claims, wherein the network identification address (add1) comprises a HTTP URL, FTP address.

9. The method of any of the preceding claims, wherein the unique identifier comprises at least one of: a file Cyclic Redundancy Check number, Hash number, SHA-1 or MD5 number.

10. The method of any of the preceding claims, wherein the network identification address (add1) is user specific.

11. A computer program product comprising computer executable instructions to perform the method steps of the method of the preceding claims.

12. A mobile telecommunication device (800) for use in a mobile telecommunication system (88), the telecommunication system comprising an application server (811) that is connected to the mobile communications device via a network (813), the application server (811) managing at least one database (812) comprising a set of one or more documents (831,835), wherein the documents of the set of documents (831, 835) are assigned at least one network identification address (836) for accessing the documents, the mobile telecommunication device (800) comprising a processor (803), display device (825) and memory (807), wherein the memory (807) is configured to store at least one application (815), the application comprising instructions that, when executed, generate on the display device (825) a graphical user interface (827), the graphical user interface (827) comprising a set of user interface elements (A-C), wherein a first user interface element (B) of the set of user interface elements (A-C) is described by one or more documents (820) of the set of documents (831, 835), the mobile telecommunication device (800) comprising a control unit (819), wherein the control unit (819) is configured for:
a) receiving a selection of the first user interface element (B);
b) displaying on the display device (825) a listing (820) of the one or more documents;
c) receiving a selection of a document (840) of the one or more documents (820);
d) identifying in a cache (817) of the mobile telecommunication device (800) the selected document (840) ;
e) in case the cache comprises the selected document (840)
∘ using the content of the selected document (840) for generating a unique identifier for uniquely identifying the content of the selected document (840) being stored in the cache (817);
∘ in response to a determination, using the unique identifier, that the content of the selected document (840) matches the content of a document of the set of documents (831, 835), retrieving the selected document (840) from the cache (817);
f) if the selected document (840) is not stored in the cache (817)
∘ requesting from the application server (811) a network identification address (add1) of the selected document (840), if the network identification address (add1) is not locally stored in the mobile telecommunication device (800), and receiving the network identification address (add1);
∘ downloading using the network identification address (add1) the selected document (840);
∘ storing the downloaded document (840) in the cache (817).

## Patentansprüche

1. Verfahren zum Betreiben einer Mobiltelekommunikationsvorrichtung (800) für ein Telekommunikationssystem (88), wobei das Telekommunikationssystem (88) einen Anwendungsserver (811) aufweist, der über ein Netzwerk (813) mit der Mobilkommunikationsvorrichtung (800) verbunden ist, wobei der Anwendungsserver (811) den Zugriff auf wenigstens eine Datenbank (812) kontrolliert, die einen Satz von einem oder mehr Dokumenten (831, 835) aufweist, wobei den Dokumenten des Dokumentensatzes (831, 835) wenigstens eine Netzkennungsadresse (836) zum Zugreifen auf die Dokumente des Dokumentensatzes zugeordnet wird, wobei die Mobiltelekommunikationsvorrichtung (800) einen Prozessor (803), eine Anzeigevorrichtung (825) und einen Speicher (807) aufweist, wobei der Speicher (807) zum Speichern von wenigstens einer Anwendung (815) konfiguriert ist, wobei die Anwendung (815) Anweisungen aufweist, die bei Ausführung eine grafische Benutzungsoberfläche (827) auf der Anzeigevorrichtung (825) generieren, wobei die grafische Benutzungsoberfläche (827) einen Benutzungsoberflächenelementesatz (A - C) aufweist, wobei ein erstes Benutzungsoberflächenelement (B) des Benutzungsoberflächenelementesatzes (A - C) eine grafische Darstellung von einem oder mehr Dokumenten (820) des Dokumentensatzes (831, 835) ist, wobei das Verfahren aufweist:
a) Empfangen einer Auswahl des ersten Benutzungsoberflächenelements (B);
b) Anzeigen einer Auflistung (820) des einen oder der mehr Dokumente auf der Anzeigevorrichtung (825);
c) Empfangen einer Auswahl eines Dokuments (840) des einen oder der mehr Dokumente (820);
d) Identifizieren des ausgewählten Dokuments in einem Cache (817) der Mobiltelekommunikationsvorrichtung (800) ;
e) im Fall, dass der Cache das ausgewählte Dokument (840) aufweist,
∘ Verwenden des Inhalts des ausgewählten Dokuments (840) zum Generieren einer eindeutigen Kennung zum eindeutigen Identifizieren des Inhalts des im Cache gespeicherten ausgewählten Dokuments (840);
∘ als Reaktion auf eine Bestimmung unter Verwendung der eindeutigen Kennung, dass der Inhalt des ausgewählten Dokumentes (840) mit dem Inhalt eines Dokuments des Dokumentensatzes (831, 835) übereinstimmt, Abrufen des ausgewählten Dokuments (840) aus dem Cache (817);
f) falls das ausgewählte Dokument (840) nicht im Cache (817) gespeichert wird,
∘ Anfordern einer Netzkennungsadresse (addl) des ausgewählten Dokuments (840) vom Anwendungsserver (811), falls die Netzkennungsadresse (addl) nicht lokal in der Mobiltelekommunikationsvorrichtung (800) gespeichert wird, und Empfangen der Netzkennungsadresse (addl);
∘ Herunterladen des ausgewählten Dokuments (840) unter Verwendung der Netzkennungsadresse (addl);
∘ Speichern des heruntergeladenen Dokuments (840) im Cache (817).

2. Verfahren nach Anspruch 1, wobei das Bestimmen, dass der Inhalt des ausgewählten Dokuments mit dem Inhalt eines Dokuments des Dokumentensatzes übereinstimmt, Folgendes aufweist:
- Senden der eindeutigen Kennung an den Anwendungsserver (811) und Anfragen, ob der Inhalt des ausgewählten Dokuments (840) im Cache (817) mit dem Inhalt eines Dokuments des Dokumentensatzes (831, 835) übereinstimmt, unter Verwendung der eindeutigen Kennung;
- Empfangen einer Antwortnachricht vom Anwendungsserver (811), die angibt, ob das ausgewählte Dokument (840) mit einem Dokument des Dokumentensatzes (831, 835) übereinstimmt, wobei die Antwortnachricht die Netzkennungsadresse (addl) des ausgewählten Dokuments (840) aufweist.

3. Verfahren nach einem der vorhergehenden Ansprüche, wobei die Netzkennungsadresse (836) einem Ablaufzeitpunkt der Netzkennungsadresse (837) zugeordnet ist, wobei Schritt e) ferner aufweist:
- Bestimmen eines Zeitpunkts der nächsten Auffrischung des Caches (817) unter Verwendung der Größe des Caches;
- als Reaktion auf das Bestimmen, dass der Zeitpunkt der nächsten Auffrischung später als der Ablaufzeitpunkt (tl) der Netzkennungsadresse (addl) ist:
- Steuern des Anwendungsservers (811) zum Ändern des Ablaufzeitpunkts (tl) auf einen Zeitpunkt, der später als der Zeitpunkt der nächsten Auffrischung ist.

4. Verfahren nach einem der vorhergehenden Ansprüche, wobei die Netzkennungsadresse (836) einem Ablaufzeitpunkt (837) der Netzkennungsadresse zugeordnet ist, wobei die Mobiltelekommunikationsvorrichtung (800) eine batteriebetriebene Vorrichtung ist, ferner aufweisend:
- Bestimmen, dass die verbleibende Batterielebensdauer an einem gegebenen Zeitpunkt später nach dem Ablaufzeitpunkt der Netzkennungsadresse (addl) endet;
- Steuern des Anwendungsservers (811) zum Ändern des Ablaufzeitpunkts (tl) auf einen Zeitpunkt, der später als der gegebene Zeitpunkt ist.

5. Verfahren nach einem der vorhergehenden Ansprüche, wobei Schritt e) durchgeführt wird, wenn die Cache-Fehlzugriffsrate des Caches (817) unter einer vordefinierten maximalen Cache-Fehlzugriffsratenschwelle ist, ansonsten ist, wenn Schritt e) nicht durchgeführt wird, das ausgewählte Dokument nicht im Cache.

6. Verfahren nach einem der vorhergehenden Ansprüche, das ferner das Einrichten einer ersten und einer zweiten Kommunikationsverbindung zwischen der Mobiltelekommunikationsvorrichtung und dem Anwendungsserver bzw. zwischen der Mobiltelekommunikationsvorrichtung und der Datenbank aufweist, wobei die Bandbreite der zweiten Kommunikationsverbindung höher als die Bandbreite der ersten Kommunikationsverbindung ist.

7. Verfahren nach Anspruch 6, wobei die zweite Datenverbindung eine sichere Datenverbindung ist, die eine sichere HyperText Transfer Protocol- (HTTP) -Verbindung aufweist.

8. Verfahren nach einem der vorhergehenden Ansprüche, wobei die Netzkennungsadresse (addl) eine HTTP URL-, FTP-Adresse aufweist.

9. Verfahren nach einem der vorhergehenden Ansprüche, wobei die eindeutige Kennung wenigstens eines der Folgenden aufweist: eine Nummer der zyklischen Datei-Blockprüfung, eine Hash-Nummer, eine SHA-1- oder eine MD5-Nummer.

10. Verfahren nach einem der vorhergehenden Ansprüche, wobei die Netzkennungsadresse (add1) benutzerspezifisch ist.

11. Computerprogrammprodukt, das computerausführbare Anweisungen zum Durchführen der Verfahrensschritte des Verfahrens nach einem der vorhergehenden Ansprüche aufweist.

12. Mobiltelekommunikationsvorrichtung (800) zur Verwendung in einem Mobiltelekommunikationssystem (88), wobei das Telekommunikationssystem (88) einen Anwendungsserver (811) aufweist, der über ein Netzwerk (813) mit der Mobilkommunikationsvorrichtung verbunden ist, wobei der Anwendungsserver (811) wenigstens eine Datenbank (812) verwaltet, die einen Satz von einem oder mehr Dokumenten (831, 835) aufweist, wobei den Dokumenten des Dokumentensatzes (831, 835) wenigstens eine Netzkennungsadresse (836) zum Zugreifen auf die Dokumente zugeordnet ist, wobei die Mobiltelekommunikationsvorrichtung (800) einen Prozessor (803), eine Anzeigevorrichtung (825) und einen Speicher (807) aufweist, wobei der Speicher (807) zum Speichern von wenigstens einer Anwendung (815) konfiguriert ist, wobei die Anwendung (815) Anweisungen aufweist, die bei Ausführung eine grafische Benutzungsoberfläche (827) auf der Anzeigevorrichtung (825) generieren, wobei die grafische Benutzungsoberfläche (827) einen Benutzungsoberflächenelementesatz (A - C) aufweist, wobei ein erstes Benutzungsoberflächenelement (B) des Benutzungsoberflächenelementesatzes (A - C) von einem oder mehr Dokumenten (820) des Dokumentensatzes (831, 835) beschrieben wird, wobei die Mobiltelekommunikationsvorrichtung (800) eine Steuereinheit (819) aufweist, wobei die Steuereinheit (819) konfiguriert ist zum:
a) Empfangen einer Auswahl des ersten Benutzungsoberflächenelements (B);
b) Anzeigen einer Auflistung (820) des einen oder der mehr Dokumente auf der Anzeigevorrichtung (825);
c) Empfangen einer Auswahl eines Dokuments (840) des einen oder der mehr Dokumente (820);
d) Identifizieren des ausgewählten Dokuments (840) in einem Cache (817) der Mobiltelekommunikationsvorrichtung (800) ;
e) im Fall, dass der Cache das ausgewählte Dokument (840) aufweist,
∘ Verwenden des Inhalts des ausgewählten Dokuments (840) zum Generieren einer eindeutigen Kennung zum eindeutigen Identifizieren des Inhalts des im Cache (817) gespeicherten ausgewählten Dokuments (840);
∘ als Reaktion auf eine Bestimmung unter Verwendung der eindeutigen Kennung, dass der Inhalt des ausgewählten Dokumentes (840) mit dem Inhalt eines Dokuments des Dokumentensatzes (831, 835) übereinstimmt, Abrufen des ausgewählten Dokuments (840) aus dem Cache (817);
f) falls das ausgewählte Dokument (840) nicht im Cache (817) gespeichert wird,
∘ Anfordern einer Netzkennungsadresse (addl) des ausgewählten Dokuments (840) vom Anwendungsserver (811), falls die Netzkennungsadresse (addl) nicht lokal in der Mobiltelekommunikationsvorrichtung (800) gespeichert wird, und Empfangen der Netzkennungsadresse (addl);
∘ Herunterladen des ausgewählten Dokuments (840) unter Verwendung der Netzkennungsadresse (addl);
∘ Speichern des heruntergeladenen Dokuments (840) im Cache (817).

## Revendications

1. Procédé de mise en oeuvre d'un dispositif de télécommunications mobile (800) pour un système de télécommunication (88), le système de télécommunication (88) comprenant un serveur d'application (811) qui est connecté au dispositif de télécommunications mobile (800) par le biais d'un réseau (813), le serveur d'application (811) commandant l'accès à au moins une base de données (812) comprenant un ensemble d'un ou de plusieurs documents (831, 835), où les documents de l'ensemble de documents (831, 835) sont associés à au moins une adresse d'identification de réseau (836) pour un accès aux documents de l'ensemble de documents, le dispositif de télécommunication mobile (800) comprenant un processeur (803), un dispositif d'affichage (825) et une mémoire (807), où la mémoire (807) est configurée pour stocker au moins une application (815), l'application (815) comprenant des instructions qui, lorsqu'elles sont exécutées, génèrent sur le dispositif d'affichage (825) une interface graphique d'utilisateur (827), l'interface graphique d'utilisateur (827) comprenant un ensemble d'éléments d'interface (A à C), où un premier élément d'interface d'utilisateur (B) de l'ensemble d'éléments d'interface d'utilisateur (A à C) est une représentation graphique d'un ou de plusieurs documents (820) de l'ensemble de documents (831, 835), le procédé comprenant :
a) la réception d'une sélection du premier élément d'interface d'utilisateur (B) ;
b) l'affichage, sur le dispositif d'affichage (825), d'une liste (820) du ou des documents ;
c) la réception d'une sélection d'un document (840) parmi le ou les documents (820) ;
d) l'identification, dans un cache (817) du dispositif de télécommunication mobile (800), du document sélectionné ;
e) dans le cas où le cache comprend le document (840) sélectionné
∘ l'utilisation du contenu du document (840) sélectionné pour générer un identifieur unique pour identifier de manière unique le contenu du document (840) sélectionné étant stocké dans le cache,
∘ en réponse à une détermination utilisant l'identifieur unique, que le contenu du document (840) sélectionné correspond au contenu d'un document de l'ensemble de documents (831, 835), la récupération du document (840) sélectionné à partir du cache (817) ;
f) si le document (840) sélectionné n'est pas stocké dans le cache (817)
∘ la demande, à partir du serveur d'application (811), d'une adresse d'identification de réseau (addl) du document (840) sélectionné, si l'adresse d'identification de réseau (addl) n'est pas stockée localement dans le dispositif de télécommunication mobile (800), et la réception de l'adresse de certification de réseau (addl) ;
∘ le téléchargement du document (840) sélectionné en utilisant l'adresse d'identification de réseau (addl) ;
∘ le stockage du document (840) téléchargé dans le cache (817).

2. Procédé selon la revendication 1, dans lequel la détermination que le contenu du document sélectionné correspond au contenu d'un document de l'ensemble des documents comprend
- l'envoi de l'identifieur unique vers le serveur d'application (811) et la demande si le contenu du document (840) sélectionné dans le cache (817) correspond au contenu d'un document de l'ensemble de documents (831, 835) en utilisant l'identifieur unique ;
- la réception d'un message de réponse à partir du serveur d'application (811) indiquant si le document (840) sélectionné correspond avec un document de l'ensemble de documents (831, 835), où le message de réponse comprend l'adresse d'identification de réseau (addl) du document (840) sélectionné.

3. Procédé selon l'une quelconque des revendications précédentes, dans lequel l'adresse d'identification de réseau (836) est associée avec une durée d'expiration de l'adresse d'identification de réseau (837), où l'étape e) comprend en outre :
- la détermination d'un temps d'actualisation suivant du cache (817) en utilisant la dimension du cache ;
- en réponse à la détermination que le temps d'actualisation suivant est après la durée d'expiration (tl) de l'adresse d'identification de réseau (addl) ;
- la commande du serveur d'application (811) pour modifier la durée d'expiration (tl) à un moment après le temps d'actualisation suivant.

4. Procédé selon l'une quelconque des revendications précédentes, dans lequel l'adresse d'identification de réseau (836) est associée avec une durée d'expiration (837) de l'adresse d'identification de réseau, où le dispositif de télécommunication mobile (800) est un dispositif alimenté par une batterie, comprenant en outre :
- la détermination que la durée de vie résiduelle de la batterie à un instant donné après la durée d'expiration de l'adresse d'identification de réseau (addl) ;
- la commande du serveur d'application (811) pour modifier la durée d'expiration (tl) à un instant plus tard que l'instant donné.

5. Procédé selon l'une quelconque des revendications précédentes, dans lequel l'étape e) est réalisée si le taux d'échec de cache du cache (817) est en dessous d'un seuil de taux d'échec de cache maximal prédéfini, autrement, si l'étape e) n'est pas effectuée, le document sélectionné n'est pas dans le cache.

6. Procédé selon l'une quelconque des revendications précédentes, comprenant en outre l'établissement d'un premier et d'une deuxième liens de communication entre le dispositif de télécommunication mobile et le serveur d'application et entre le dispositif de télécommunication mobile et les bases de données, respectivement, où la largeur de bande du deuxième lien de communication est plus élevée que la largeur de bande du premier lien de communication.

7. Procédé selon la revendication 6, dans lequel le deuxième lien de communication a un lien de données sécurisé comprenant une connexion de protocole de transfert d'hyper texte (http).

8. Procédé selon l'une quelconque des revendications précédentes, dans lequel l'adresse d'identification de réseau (addl) comprend une adresse FTP http d'URL.

9. Procédé selon l'une quelconque des revendications précédentes, dans lequel l'identifieur unique comprend au moins un nombre parmi un nombre de contrôle de redondance cyclique, un nombre de hachage, un nombre SHA-1 ou MD5.

10. Procédé selon l'une quelconque des revendications précédentes, dans lequel l'adresse d'identification de réseau (addl) est spécifique à l'utilisateur.

11. Produit de programme informatique comprenant des instructions exécutables pour réaliser les étapes de procédé du procédé selon les revendications précédentes.

12. Dispositif de télécommunication mobile (800) destiné à une utilisation dans un système de télécommunication mobile (88), le système de télécommunication comprenant un serveur d'application (811) qui est connecté au dispositif de télécommunications mobile par le biais d'un réseau (813), le serveur d'application (811) gérant au moins une base de données (812) comprenant un ensemble d'un ou de plusieurs documents (831, 835), où les documents de l'ensemble de documents (831, 835) sont associés à au moins une adresse d'identification de réseau (836) pour un accès aux documents, le dispositif de télécommunication mobile (800) comprenant un processeur (803), un dispositif d'affichage (825) et une mémoire (807), où la mémoire (807) est configurée pour stocker au moins une application (815), l'application comprenant des instructions qui, lorsqu'elles sont exécutées, génèrent sur le dispositif d'affichage (825) une interface graphique d'utilisateur (827), l'interface graphique d'utilisateur (827) comprenant un ensemble d'éléments d'interface (A à C), où un premier élément d'interface d'utilisateur (B) de l'ensemble d'éléments d'interface d'utilisateur (A à C) est décrit par un ou plusieurs documents (820) de l'ensemble de documents (831, 835), le dispositif de télécommunication mobile (800) comprenant une unité de commande (819), où l'unité de commande (819) est configurée pour :
a) la réception d'une sélection du premier élément d'interface d'utilisateur (B) ;
b) l'affichage sur le dispositif d'affichage (825) d'une liste (820) du ou des documents ;
c) la réception d'une sélection d'un document (840) parmi le ou les documents (820) ;
d) l'identification dans un cache (817) du dispositif de télécommunication mobile (800) du document (840) sélectionnée ;
e) dans le cas où le cache comprend le document (840) sélectionné
∘ l'utilisation du contenu du document (840) sélectionné pour générer un identifieur unique pour identifier de manière unique le contenu du document (840) sélectionné étant stocké dans le cache (817) ;
∘ en réponse à une détermination utilisant l'identifieur unique, que le contenu du document (840) sélectionné correspond au contenu d'un document de l'ensemble de documents (831, 835), la récupération du document (840) sélectionné à partir du cache (817) ;
f) si le document (840) sélectionné n'est pas stocké dans le cache (817)
∘ la demande à partir du serveur d'application (811) d'une adresse d'identification de réseau (addl) du document (840) sélectionné, si l'adresse d'identification de réseau (addl) n'est pas stockée localement dans un dispositif de télécommunication mobile (800), et la réception de l'adresse d'identification de réseau (addl) ;
∘ le téléchargement du document (840) sélectionné en utilisant l'adresse d'identification de réseau (addl) ;
∘ le stockage du document (840) téléchargé dans le cache (817).
